# EUROPEAN PATENT APPLICATION

(11) **EP 2 993 596 A1**
(43) Date of publication of application: **09.03.2016**
(21) Application number: 15183831.5
(22) Date of filing: 04.09.2015
(51) Int. Cl.: G06F 17/30

(54) **METHOD AND APPARATUS FOR INDEX PROCESSING**

(30) Priority: 05.09.2014 KR 20140119155
(71) Applicant: Samsung Electronics Co., Ltd., Gyeonggi-do 16677 (KR)
(72) Inventor: SONG, Se-Jun, 16677 Gyeonggi-do (KR); KANG, Myung-Su, 16677 Gyeonggi-do (KR)
(74) Representative: Birchenough, Lewis

(57) **Abstract**

A method in an electronic device, comprising: displaying a set of data items and a first index list; detecting a first selection of a first index from the first index list; identifying a first subset of the set of data items, the first subset being associated with the first index; displaying, by the electronic device, a second index list that is associated with the first subset; detecting a second selection of a second index from the second index list; and identifying a second subset of the set of data items, the second subset being associated with both the first index and the second index.

## Description

### TECHNICAL FIELD

The present disclosure relates to electronic devices and more particularly to a method and apparatus for index processing.

### BACKGROUND

To facilitate the user's data searching, index information is provided after data is arranged. Especially for an electronic device with a size-limited display, such as the mobile device, since the amount of data to be displayed on the display is restricted, more index information is needed.

Index information is usually provided by uniformly arranging index items in an index bar displayed in a designated position. However, arranging the index items in the index bar at uniform intervals in a uniform size without regard to data distribution may hinder the user from promptly access desired data if the data distribution is lopsided.

The above information is presented as background information only to assist with an understanding of the present disclosure. No determination has been made, and no assertion is made, as to whether any of the above might be applicable as prior art with regard to the present disclosure.

### SUMMARY

According to aspects of the disclosure, a method in an electronic device is provided, comprising: displaying a set of data items and a first index list; detecting a first selection of a first index from the first index list; identifying a first subset of the set of data items, the first subset being associated with the first index; displaying, by the electronic device, a second index list that is associated with the first subset; detecting a second selection of a second index from the second index list; and identifying a second subset of the set of data items, the second subset being associated with both the first index and the second index.

According to aspects of the disclosure, an electronic device is provided, comprising: a display; and an input device; at least one processor configured to: control the display to display a set of data items and a first index list; detect, via the input device, a first selection of a first index from the first index list; identify first subset of the set of data items, the first subset being associated with the first index; generate a second index list that is associated with the first subset and control the display to display the second index list; detect, via the input device, a second selection of a second index from the second index list; and identify a second subset of the set of data items, the second subset being associated with both the first index and the second index.

According to aspects of the disclosure, a non-transitory computer-readable medium is provided comprising storing one or more processor-executable instructions, which when executed by at least one processor cause the processor to execute a method comprising the steps of: displaying a set of data items and a first index list; detecting a first selection of a first index from the first index list; identifying a first subset of the set of data items, the first subset being associated with the first index; displaying a second index list that is associated with the first subset; detecting a second selection of a second index from the second index list; and identifying a second subset of the set of data items, the second subset being associated with both the first index and the second index.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram of an example of a network environment including an electronic device, according to an embodiment of the present disclosure;
FIG. 2 is a diagram of an example of an index processing module, according to an embodiment of the present disclosure;
FIG. 3 is a flowchart of an example of a process, according to an embodiment of the present disclosure;
FIGS. 4A is a diagram of an example of a user interface, according to an embodiment of the present disclosure;
FIGS. 4B is a diagram of an example of a user interface, according to an embodiment of the present disclosure;
FIGS. 4C is a diagram of an example of a user interface, according to an embodiment of the present disclosure;
FIG. 5A is a diagram of an example of contact data set, according to an embodiment of the present disclosure;
FIG. 5B is a diagram of an example of a data subset, according to an embodiment of the present disclosure;
FIG. 5C is a diagram of an example of a data subset, according to an embodiment of the present disclosure;
FIG. 5D is a diagram of an example of a data subset, according to an embodiment of the present disclosure;
FIG. 6 is a flowchart of an example of a process, according to an embodiment of the present disclosure;
FIGS. 7A is a diagram of an example of a user interface, according to an embodiment of the present disclosure;
FIGS. 7 B is a diagram of an example of a user interface, according to an embodiment of the present disclosure;
FIGS. 7C is a diagram of an example of a user interface, according to an embodiment of the present disclosure;
FIGS. 7D is a diagram of an example of a user interface, according to an embodiment of the present disclosure;
FIGS. 7E is a diagram of an example of a user interface, according to an embodiment of the present disclosure;
FIGS. 7F is a diagram of an example of a user interface, according to an embodiment of the present disclosure;
FIGS. 7G is a diagram of an example of a user interface, according to an embodiment of the present disclosure;
FIGS. 7H is a diagram of an example of a user interface, according to an embodiment of the present disclosure;
FIGS. 7I is a diagram of an example of a user interface, according to an embodiment of the present disclosure;
FIGS. 7J is a diagram of an example of a user interface, according to an embodiment of the present disclosure;
FIGS. 7K is a diagram of an example of a user interface, according to an embodiment of the present disclosure;
FIGS. 7L is a diagram of an example of a user interface, according to an embodiment of the present disclosure;
FIG. 8 is a diagram of an example of an electronic device, according to an embodiment of the present disclosure; and
FIG. 9 is a diagram of an example of a protocol stack, according to an embodiment of the present disclosure.

Throughout the drawings, like reference numerals will be understood to refer to like parts, components, and structures.

### DETAILED DESCRIPTION

Embodiments of the present disclosure will now be described with reference to accompanying drawings. It includes various specific details to assist in that understanding but these are to be regarded as merely exemplary and various modifications may be made to the embodiments. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. Like numbers refer to like elements throughout. Like numbers refer to like elements throughout.

The terms "comprise" and/or "comprising" as herein used specify the presence of disclosed functions, operations, or components, but do not preclude the presence or addition of one or more other functions, operations, or components. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items. For examples, "A or B" may include A, or include B, or include both A and B.

Ordinal numbers as used herein, such as "first", "second", etc., may modify various components of various embodiments, but do not limit those components. For example, these terms do not limit order and/or importance of corresponding elements, components, regions, layers and/or sections. These terms are only used to distinguish one element, component, region, layer or section from another region, layer or section. For example, a first user device and a second user device refers to two different user devices. Thus, a first element, component, region, layer or section discussed below could be termed a second element, component, region, layer or section without departing from the teachings of the present disclosure.

When the term "connected" or "coupled" is used, a component may be directly connected or coupled to another component or may be indirectly connected or coupled to another component via another new component. However, if a component is said to be "directly connected" or "directly coupled" to another component, it should be interpreted as literally as it says.

The terminology used herein is for the purpose of describing particular embodiments only and is not intended to limit the disclosure. It is to be understood that the singular forms "a," "an," and "the" include plural references unless the context clearly dictates otherwise.

Unless otherwise defined, all terms including technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

An electronic device as herein used may have a communication functionality. For example, the electronic device may include at least one of smart phones, tablet Personal Computers (PCs), mobile phones, video phones, e-book readers, desktop PCs, laptop PCs, netbook computers, Personal Digital Assistants (PDAs), Portable Multimedia Players (PMPs), MP3 players, mobile medical devices, cameras, and wearable devices (e.g., Head-Mounted Devices (HMDs), such as electronic glasses, electronic clothes, electronic bracelets, electronic necklaces, electronic appcessories, electronic tattoos, or smart watches).

In some embodiments, the electronic device may be a smart home appliance having a display functionality. The smart home appliance may include at least one of e.g., televisions, Digital Video Disc (DVD) players, audio systems, refrigerators, air conditioners, cleaning machines, ovens, microwaves, washing machines, air purifiers, set-top boxes, TV sets (e.g., Samsung HomeSync™, Apple TV™, or Google TV™), game consoles, electronic dictionaries, electronic keys, camcorders, and electronic albums.

In some embodiments, the electronic device may include at least one of a variety of medical equipment (e.g., Magnetic Resonance Angiography (MRA), Magnetic Resonance Imaging (MRI), Computed Tomography (CT), photographing device, ultrasonic device, etc.), navigation devices, Global Positioning System (GPS) receivers, Event Data Recorders (EDRs), Flight Data Recorders (FDRs), car infotainment devices, marine electronic devices (e.g., marine navigation systems, gyro-compass, etc.), avionics, security devices, or industrial or home robots.

In some embodiments, the electronic device may include at least one of furniture or a part of a building/structure, electronic boards, electronic signature receiving devices, projectors, or various instrumental equipment (e.g., meters for water, electricity, gas, or radio waves), which have a communication functionality. The electronic device in accordance with various embodiments of the present disclosure may be one or more combinations of the aforementioned devices. It will be obvious to a person of ordinary skill in the art that the electronic device is not limited to the aforementioned examples.

An electronic device in accordance with various embodiments of the present disclosure will now be described with reference to accompanying drawings. The term "user" as herein used may refer to a person who uses the electronic device or a device (e.g., an artificially intelligent device) that uses the electronic device.

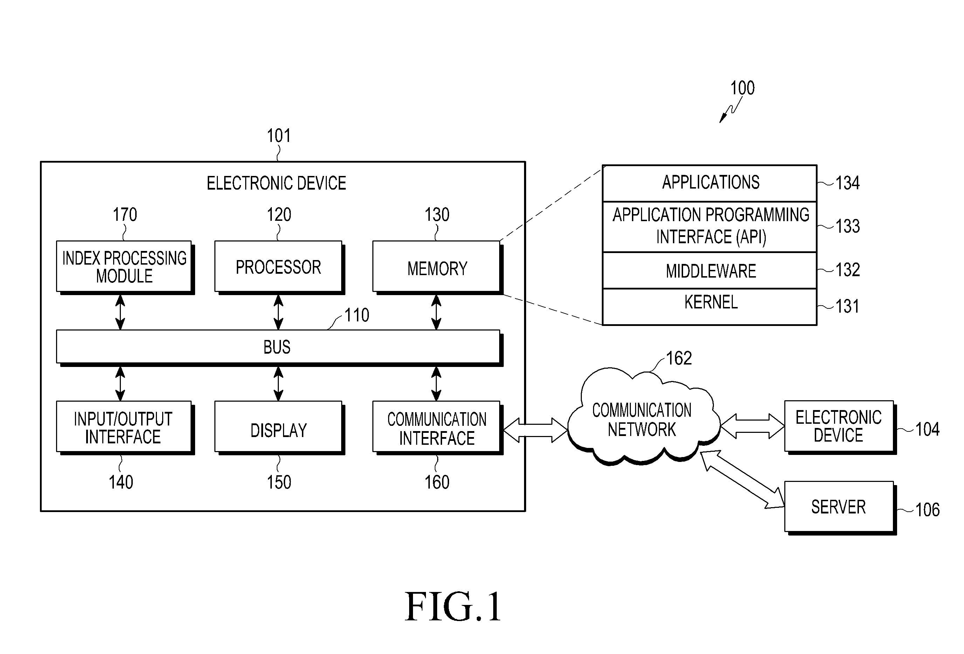

FIG. 1 is a diagram of an example of a network environment 100 including an electronic device 101, according to an embodiment of the present disclosure. Referring to FIG. 1, the electronic device 101 may include a bus 110, a processor 120, a memory 130, an input/output (I/O) interface 140, a display 150, a communication interface 160, and an index processing module 170.

The bus 110 may include circuitry for interconnecting the enumerated components and delivering communications (e.g., control messages) among them.

The processor 120 may include any suitable type of processing circuitry, such as one or more general purpose processors (e.g., ARM-based processors), a Digital Signal Processor (DSP), a Programmable Logic Device (PLD), an Application-Specific Integrated Circuit (ASIC), a Field-Programmable Gate Array (FPGA), *etc.* The processor 120 may, for example, receive requests or commands from the enumerated components, the memory 130, the I/O interface 140, the display 150, the communication interface 160, or the index processing module 170 via the bus 110, interpret the requests or commands, and perform an operation or data processing according to the interpreted request or command.

The memory 130 may include any suitable type of volatile or non-volatile memory, such as Random Access Memory (RAM), Read-Only Memory (ROM), Network Accessible Storage (NAS), cloud storage, a Solid State Drive (SSD), *etc.* The memory 130 may store requests, commands, or data received or generated from the enumerated components, e.g., the processor 120, the I/O interface 140, the display 150, the communication interface 160, or the index processing module 170. The memory 130 may include, for example, programming modules, such as kernel 131, middleware 132, Application Programming Interface (API) 133, application 134, or the like.

Each of the programming modules may be implemented in software, firmware, hardware, or two or more combinations thereof.

The kernel 131 may control or manage system resource (e.g., the bus 110, the processor 120, the memory 130 or the like) to be used to carry out an operation or function implemented by the other programming modules, e.g., the middleware 132, the API 133, or the application 134. Furthermore, the kernel 131 may provide an interface for the middleware 132, the API 133, or the application 134 to access respective components of the electronic device 101 to control or manage them.

The middleware 132 may act as an intermediary for the API 133 or the application 134 to communicate data with the kernel 131. In addition, the middleware 132 may perform control operations (e.g., scheduling or load balancing) in response to a task request received from the application 134 by way of e.g., placing a high priority on at least one application included in the application 134 to use system resources (e.g., the bus 110, the processor 120, the memory or the like) of the electronic device 101.

The API 133 is an interface for the application 134 to control a function provided from the kernel 131 or the middleware 132, and may include at least one interface or function (e.g., an instruction) for e.g., file control, window control, image processing, text control, etc.

In accordance with various embodiments, the application 134 may include a Short Message Service (SMS)/Multimedia Message Service (MMS) application, an email application, a calendar application, an alarm application, a healthcare application (e.g., an application for measuring quantity of motion or blood sugar), or an environmental information application (e.g., an application for providing atmospheric pressure, humidity, or temperature). Additionally or alternatively, the application 134 may be an application involved in information exchange between the electronic device 101 and an external electronic device 104. The application involved in such information exchange may include e.g., a notification relay application for relaying particular information to the external electronic device 104 or a device management application for managing the external electronic device 104.

For example, the notification relay application may include a functionality for notifying the external electronic device 104 of notification information generated in any other application (e.g., the SMS/MMS application, the email application, the healthcare application, or the environmental information application) of the electronic device 101. Additionally or alternatively, the notification relay application may, for example, receive the notification information from the external electronic device 104 and provide the notification information to the user. The device manager application may manage (e.g., install, delete or update) a function (e.g., turning on/off the external electronic device 104 itself or a part of the external electronic device 104, or controlling display brightness of the external electronic device 104) with respect to part of the external electronic device 104 in communication with the electronic device 101, or a service (e.g., calling or messaging service) provided by the external electronic device 104 or an application running in the external electronic device 104.

In accordance with various embodiments of the present disclosure, the application 134 may include an application designated depending on an attribute of the electronic device 104, e.g., on a type of the electronic device 104. For example, in case the external electronic device 104 is an MP3 player, the application 134 may include an application related to music replay. Similarly, in case the external electronic device 104 is a mobile medical device, the application 134 may include an application related to healthcare. In accordance with an embodiment, the application 134 may include at least one of an application dedicated to the electronic device 101, and an application received from the external electronic device 104 or a server 106.

The I/O interface 140 may deliver instructions or data entered by the user through the I/O device (e.g., a sensor, a keyboard, or a touchscreen) to the processor 120, the memory 130, the communication interface 160, or the index processing module 170 via the bus 110. For example, the I/O interface 140 may provide data for a user touch input through the touchscreen to the processor 120.

The I/O interface 140 may also output a command or data received from the processor 120, the memory 130, the communication interface 160, or the index processing module 170 via the bus 110 through the I/O device (e.g., a speaker or the display 150). For example, the I/O interface 140 may output sound data processed by the processor 120 to the user through a speaker.

The display 150 may display various information (e.g., multimedia data or text data) for the user.

The communication interface 160 may connect communication between the electronic device 101 and the external electronic device 104 or the server 106.

For example, the communication interface 160 may be connected to a network 162 through wired or wireless communication and may communicate with the external electronic device 104 or the server 106. The wireless communication may include at least one of Wireless Fidelity (Wi-Fi), Bluetooth (BT), Near Field Communication (NFC), GPS, or cellular communication (e.g., Long Term Evolution (LTE), LTE-Advanced (LTE-A), Code Divisional Multiplexing Access (CDMA), Wide CDMA (WCDMA), Universal Mobile Telecommunications System (UMTS), Wireless Broadband (Wibro) or Global System for Mobile communication (GSM). The wired communication may include at least one of e.g., Universal Serial Bus (USB), High Definition Multimedia Interface (HDMI), Recommended Standard (RS) 232 or Plain Old Telephone Service (POTS).

In accordance with an embodiment, the network 162 may be a telecommunications network.

The telecommunications network may include at least one of computer network, the Internet, internet of things, or telephone network. In accordance with an embodiment, a protocol (e.g., a transport layer protocol, a data link layer protocol or a physical layer protocol) for communication between the electronic device 101 and the external device 104 or the server 106 may be supported by at least one of the application 134, the API 133, the middleware 132, the kernel 131 or the communication interface 160.

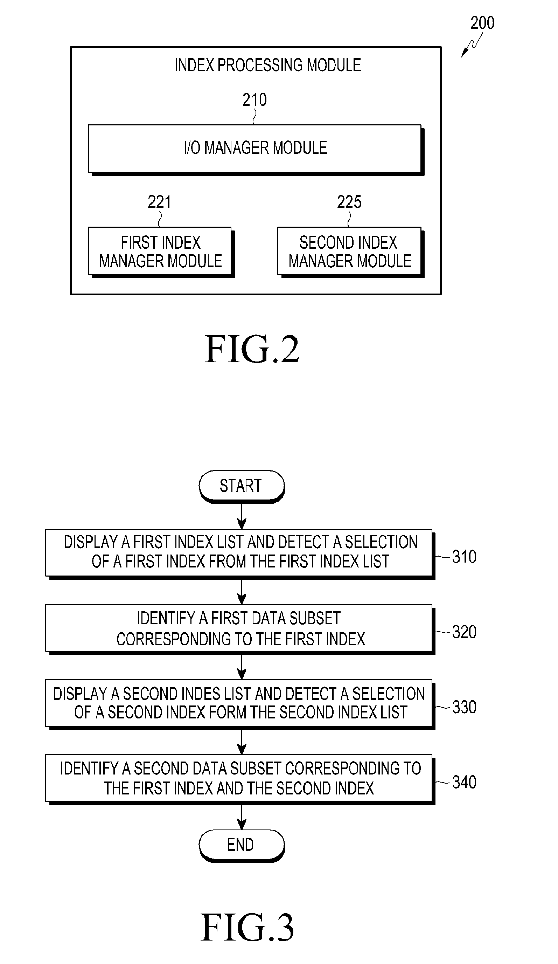

FIG. 2 is a diagram of an example of an index processing module, according to an embodiment of the present disclosure. Referring to FIG. 2, an index processing module 200 may include an I/O manager module 210, a first index manager module 221, or a second index manager module 225. Each of the modules 210, 221, 225 may be implemented using one or more processors.

The I/O manager module 210 may provide a first index UI generated by the first index manager module 221 and a second index UI generated by the second index manager module 225 to the display 150. The I/O manager module 210 may detect an input selecting at least one of a plurality of first indexes provided through the first index UI *(e.g.,* a first index list). For example, the I/O manager module 210 may detect input coordinates that indicate a position on the display 150, and provide the first index manager module 221 with a first index that corresponds to the input coordinates. The I/O manager module 210 may also forward the second index UI provided from the second index manager module 225 to the display 150. The I/O manager module 210 may also detect an input *(e.g.,* a touch, a mouse click, *etc*.) selecting at least one of a plurality of second indexes provided through the second index UI *(e.g.,* a second index list). For example, the I/O manager module 210 may detect input coordinates that indicate a position on the display 150, and provide the second index manager module 225 with a second index that corresponds to the input coordinates.

The first index manager module 221 may identify an application output through the display 150 and data provided by the application.

The first index manager module 221 may be executed in response to a request for indexes while a set of data items is displayed the application. For example, the first index manager module 221 may be executed in response to a touch input (or drag input) that occurs within a predetermined distance (e.g., 1 cm) from the right edge of the display screen while the set of data items is displayed by the application. The first index manager module 221 may generate the first index UI (e.g.,the first index list) that includes a plurality of first indexes.

The first index manager module 221 may detect a selection of a first index from the first index UI. In response to the selection, the first index manager module 221 may identify a first subset of the set of data items (hereinafter "first data subset") that corresponds to the selected index. The first index manager module 221 may provide the first data subset to the second index manager module 225.

The second index manager module 225 may then generate a second index UI *(e.g.,* a second index list) based on attributes of data items that are part of the first data subset. For example, in configuring the second indexes for the data items included in the first data subset, the second index manager module 225 may select as many second indexes as determined in advance, which are associated with relatively many data items. The second index manager module 225 may configure the second index UI including the selected predetermined number of second indexes, and provide the second index UI to the display 150 through the I/O manager module 210. Furthermore, the second index manager module 225 may identify second subset of the set of data items that correspond to the previously-selected first index and at least one second index selected through the second index UI, and display the second data subset through the I/O manager module 210.

Various data may be provided by the application and the first index UI may be configured in association with data provided by the application. For example, if the data corresponds to contact data provided by a contact application, one index in the first index UI may correspond to a first letter, while another index in the first index UI may correspond to a second letter.

For Hangul, the first index may be associated with an initial consonant of a first character of a contact. The second index may be associated with the vowel of the first character of the contact.

In another example, if the data corresponds to call log data provided by a call application, the first index or the second index may include information associated with a time stamp of the call log data. For example, the first index may be information indicating the year of the call log data, and the second index may be information indicating the month of the call log data.

Although in the above examples the first and second index UIs include alphabetic indexes, it will be noted that any other suitable type of index may be displayed. For example, as discussed below, at least one of the first and second index UI may include indexes based on timing. Thus, the first index or the second index may be anything with which to detect data provided by the application in phases. Furthermore, while the embodiments of the present disclosure illustrate that the first and second index UIs as including the same type of indexes (e.g., alphabetic indexes), in some implementations they may include different types of indexes. For example, the first index UI may include indexes associated with a time stamp of the data provided by the application while the second index UI may include indexes associated a type of the data provided by the application.

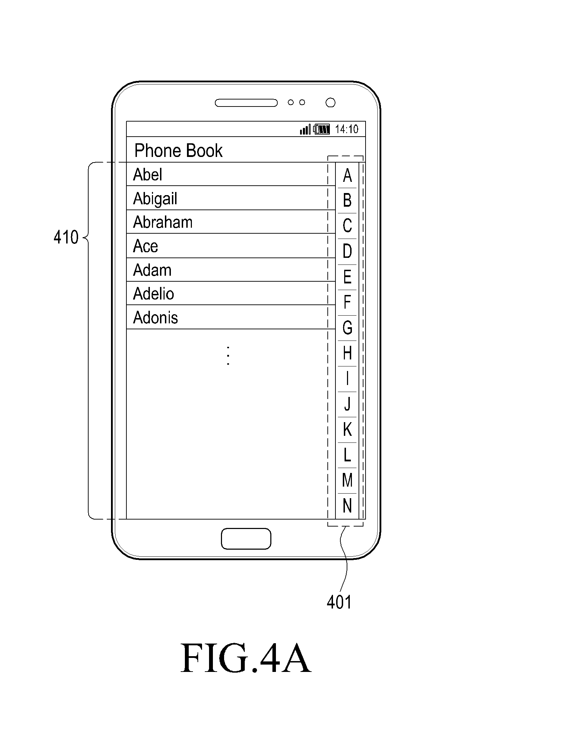

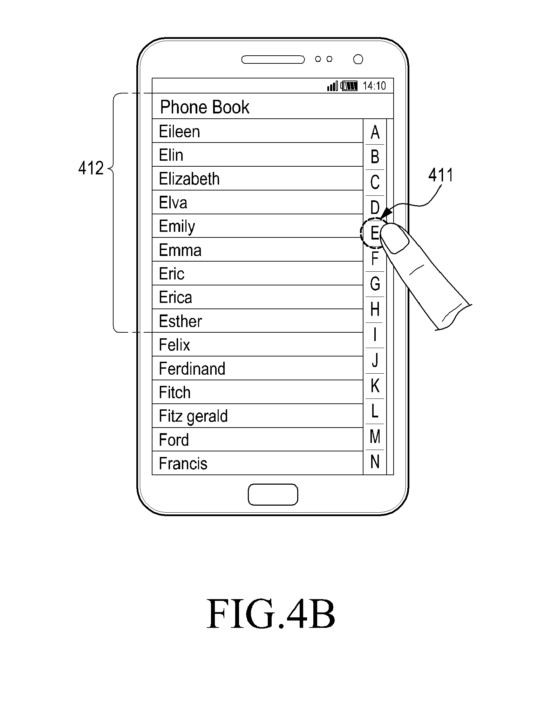

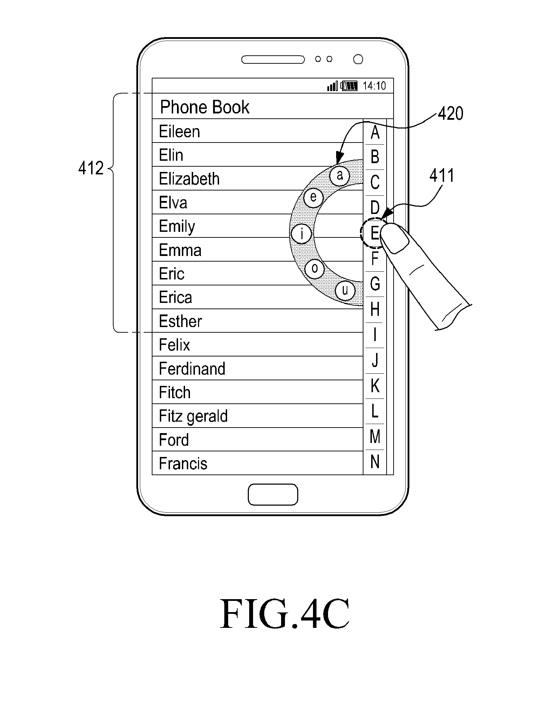

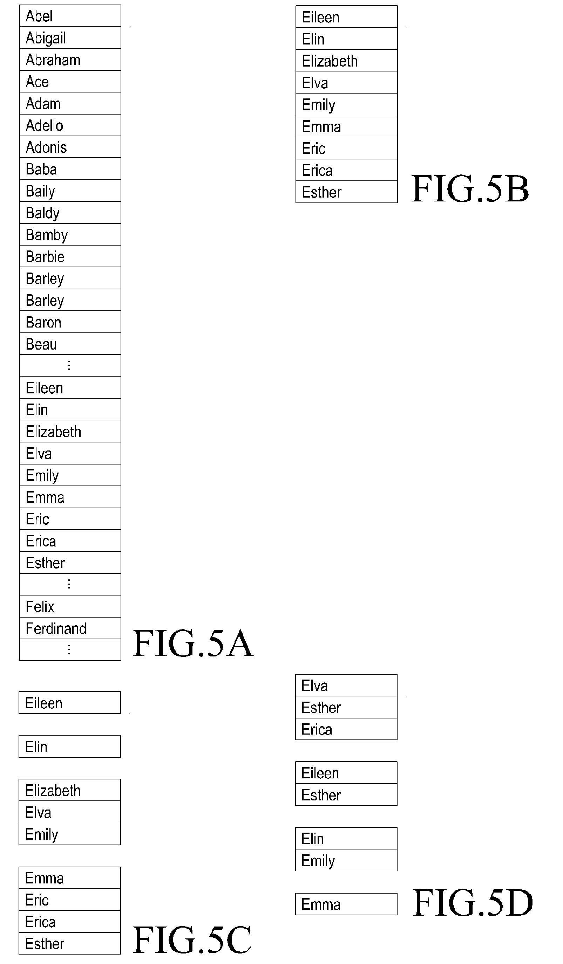

FIG. 3 is a flowchart of an example of a process, according to an embodiment of the present disclosure. FIGS. 4A, 4B, and 4C illustrate an example of a UI used in an index processing method, according to an embodiment of the present disclosure. FIGS. 5A to 5D illustrate data that is retrieved through an index processing method, according to an embodiment of the present disclosure.

Referring first to FIG. 3, the index processing method in accordance with an embodiment of the present disclosure begins by displaying a first index UI and detecting a selection of a first index from the first index UI, in operation 310. Operation 310 may be performed in response to a request for the index while a set of data items (e.g., set of data items 410 of FIG. 4A) is at least partially displayed by the application. For example, operation 310 may be performed in response to a touch input (or drag input) that occurs within a designated area, (e.g., within 1 cm from the right edge of the display screen) while the set of data items 400 is on display. Specifically, selecting the first index in operation 310 may include interacting the running application and the set of data items 410 provided from the application through the display 150, generating first indexes used to select data in the list 410, and configuring and displaying a first index UI (e.g., 401 of FIG. 4A) that contains the first indexes. The first index UI 401 may be displayed in a designated area in which the touch input (or drag input) has occurred, e.g., the area within 1 cm from the right edge of the display screen where the touch input (or drag input) has occurred.

The first index UI 401 may be configured by selecting information associated with data of the list 410 based on the type of the data items in the set 410. For example, if the set 410 includes contact records provided by a contact application, the first index UI may be configured to include first indexes that are different letters (e.g., initial consonants for Hangul, English alphabets, or the like).

In another example, if the set of data items 410 is a call log provided by a call application, the first indexes may be different indications of time(e.g., year, month, day, hour, etc.) and may permit the traversal of the set of data items based on the respective timestamps of various events that are logged in the call log.

In yet another example, if the set of data items 410 corresponds to a file list data provided by a file browser, the first indexes may be different attributes of the files that are identified in the list (e.g., time-based attributes, file type attributes, etc.) and the first UI may then be configured. In this example, the first UI may permit the traversal of the file list based on the type of the files in the list and/or the time when the files were created, last opened, and/or last used.

In still another example, if the set of data items corresponds to location-based data provided by a map application, first indexes may be generated including information associated with location information (e.g., categories of shops) and the first index UI may then be configured.

In operation 310, at least one of the first indexes may be selected by the user through the first index UI 401 (see 411 of FIG. 4B). For example, with the first index UI displaying the first indexes, if the user touches a point on the first index UI, a first index placed at the point, e.g., a English alphabets 'E' may be determined and selected.

In operation 320, one of more of the data items in the set 410 that correspond to the selected first index are identified (hereinafter "first data subset"). For example, if a contact application provides contact data as shown in FIG. 5A and the index 'E' 411 is selected by the user as shown in FIG. 4B, the subset may include all contacts whose names begin with the letter 'E', as shown in FIG. 5B. Afterwards, the first data subset may be displayed. For example, the first data subset may be displayed by scrolling the set of items to the portion that contains the first data subset. As illustrated, the first data subset may be displayed in the center part or the upper part of the list consisting of the first set of data items.

In operation 330, a plurality of second indexes are selected for inclusion in a second index UI based on attributes of data items included in the first data subset and the second index UI (420 of FIG. 4C) including the second indexes is presented *(e.g.,* a second index list). With the second index UI 420, at least one of the second indexes may be selected by the user.

In operation 330, the attributes of the data items included in the first data subset may be diversely set. For example, the second indexes may be configured using at least one attribute such as the number of the data items included in the first data subset as shown in FIG. 5C and frequency of use of the data items as shown in FIG. 5D.

In the beginning of the use of the electronic device, the second indexes may not include indexes desired by the user because the frequency of use of the data items has not sufficiently been accumulated and thus index results that meet the user's demand may not have been reflected. In configuring the second indexes using both the amount and frequency of use of the data items included in the first data subset, the second indexes may be detected using the amount of data items included in the first data subset until the frequencies of use of the data items are sufficiently accumulated. After the frequencies of use of the data items included in the first data subset is sufficiently accumulated, the second indexes may be detected based both on the amount and frequency of use of the data items included in the first data subset. For this, in operation 330, an operation of determining whether the frequency of use of the data has sufficiently been accumulated may further be performed.

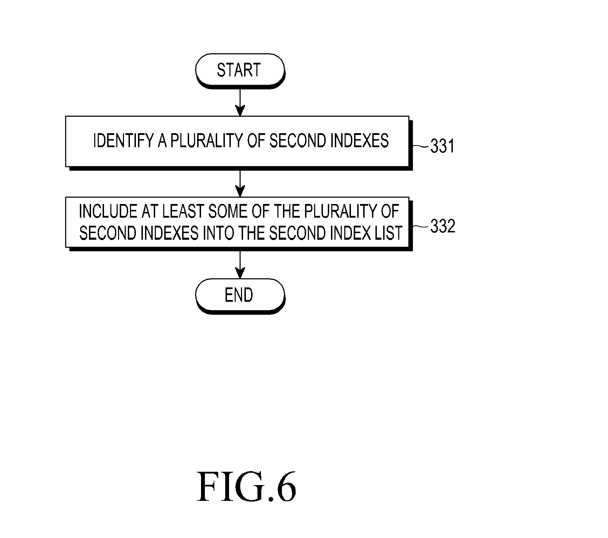

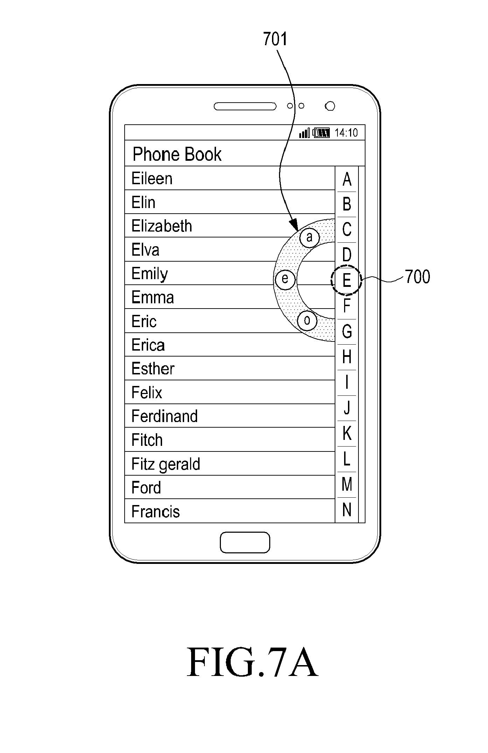

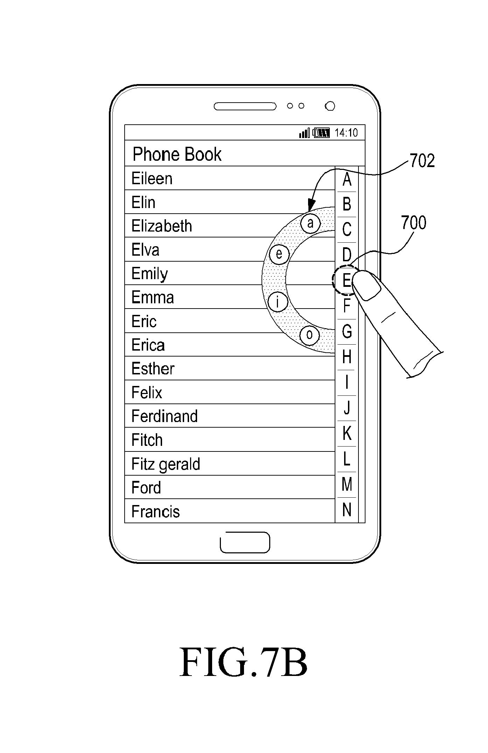

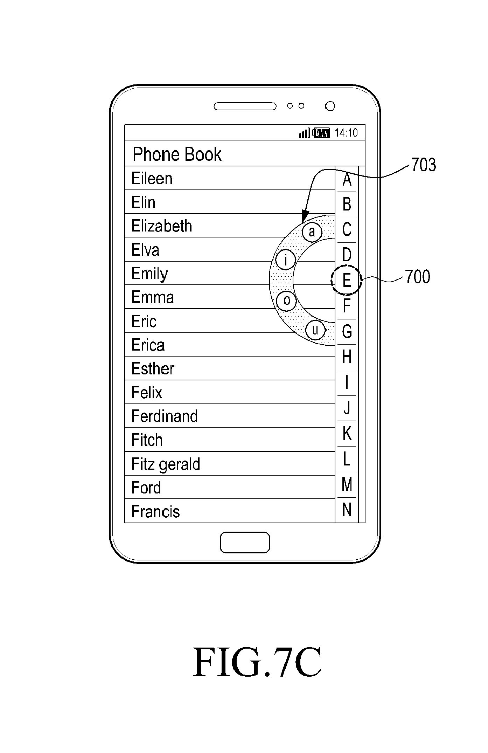

FIG. 6 is a flowchart of an example of a process, according to an embodiment of the present disclosure. FIGS. 7A to 7L illustrate second index UIs generated in the process of selecting the second index of FIG. 6, according to various embodiments of the present disclosure.

Referring to FIG. 6, selecting the second index includes identifying a plurality of second indexes based on the attributes of the data items included in the first data subset in operation 331.

The attributes of the data items included in the first data subset may be diversely set. For example, as shown in FIGS. 5C and 5D, the second indexes may be configured using at least one of attributes, such as the number and the frequency of use of the data items included in the first data subset.

Specifically, the number of the data items included in the first data subset is determined. Based on the amount of the data items included in the first data subset, a second index UI 420 may be generated that includes indexes that are associated with the largest groups of data items.

For example, as shown in FIG. 5C, the number of data items included in the first data subset may be determined. In this example, assume that data items provided by a contact application are different contact information records written in English and the number of the data items included in the first data subset is 200. Among the 200 contacts, the number of data items associated with a second index, e.g., a vowel is determined. It is assumed herein that the number of data items for vowel 'a' is 70, the number for vowel 'e' 40, 'i' 30, 'o' 20, and 'p' 9. In this regard, in operation 331, second indexes are selected for inclusion in the second index UI 420 based on satisfying a predetermined rule. For example, the predetermined rule may be that an index requires more than a predetermined amount of associated data items, e.g., 10 or more associated data items, and accordingly, indexes 'a', 'e', 'i', 'o' may be extracted.

In another example, the rule may provide that a predetermined number of second indexes *(e.g.,* 4) that have the largest number of data items *(e.g.* contacts) associated with them may be selected for inclusion into the UI 420. Thus, from the group of indexes 'a', 'e', 'i', 'o', and 'p', indexes 'a', 'e', 'i', 'o' may be included in the UI 420 because these are the four indexes associated with the largest groups of data items in that particular set of indexes.

In yet another example, the second indexes to be displayed in the second index UI 420 may be selected based on the frequency of use of the data items included in the first data subset that are associated with those indexes. For example, as shown in FIG. 5D, the frequency of use of data items included in the first data subset is determined. In this example, assume that data items provided by a contact application are contact records written in English and the number of the data items included in the first data subset is 200. Among the 200 contacts, the frequency of use of contacts associated with a second index, e.g., a vowel is determined. Assume that the frequency of use of the contacts associated with a vowel 'a' is 70, the number with a vowel 'e' 40, 'i' 30, 'o' 20, 'u' 10, and others 30. In this regard, in operation 331, second indexes corresponding to data items that are most frequently used may be selected for inclusion in the UI 420. For example, an index that has an associated data item that has been used more than predetermined number of times (e.g., 10 or more) may be selected for inclusion in the UI 420., In another example, the predetermined rule may be that a predetermined number (e.g., 4) of indexes having the highest frequency of use may be selected.

In yet another example, the second indexes to be displayed in the second index UI 420 may be selected based on both the amount and frequency of use of the data items included in the first data subset. For example, the frequency of use of the data items included in the first data subset may be determined based on statistics derived from the contact data, names or titles provided by the contact application. In the example that uses the frequency of use, it is assumed that a first index (e.g., 'E') is selected for the contact data written in Korean provided by a contact application; the number of data items included in the first data subset extracted based on the first index is 200; and the number of data items among the 200 data items included in the first data subset, extracted based on each of second indexes is determined to be 70 for 'a', 40 for 'e', 30 for'i', 20 for'o', and 30 for the others. Frequency of use of the data items included in the first data subset associated with the second index (a vowel) may further be determined. For example, it is assumed that frequencies of use of data items associated with 'i', 'o', 'u', and the other remaining vowels are 30, 15, 50 and 30, respectively. Accordingly, in operation 331, with the vowels 'a', 'e', 'i' that each have relatively greater data items in the first data subset, an index (e.g., 'u') that has a relatively high frequency of use of associated data items may further be reflected to configure second indexes to be displayed in the second index UI 420.

In operation 332, the second index UI may be configured and displayed with the second indexes determined in operation 331. Since the second index UI needs to be presented in relatively small space as compared to the first index UI, the second index UI may be presented in a way that the user may promptly access data while data distribution is taken into account.

For example, referring to FIG. 7A, a second index UI 701 may be configured to be presented near a touch point 700 where a touch has occurred that selects a first index from a first index UI. Further, the second index UI 701 may be in the form of a half circle centered at the touch point 700. Moreover, the number of second indexes included in the second index UI 701 may be set based on at least one of an amount and frequency of use of data, and depending on the number of the second indexes, the size of the half circle for presenting the second index UI may vary. For example, the second index UI 701, 702, 703 may each include a different number of second indexes and may be presented in a semi-circular layout. As shown in FIGS. 7A to 7C, in some implementations the size of the semi-circular layout may vary depending on the number of second indexes that are present.

Although it is illustrated in the embodiment of the present disclosure that the second index UI 701, 702, 703 have a semi-circular layout centered at the touch point 700, embodiments of the present disclosure are not limited thereto.

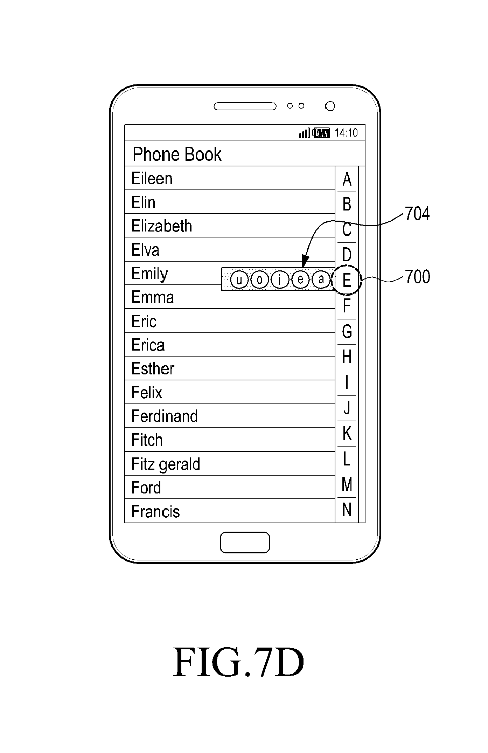

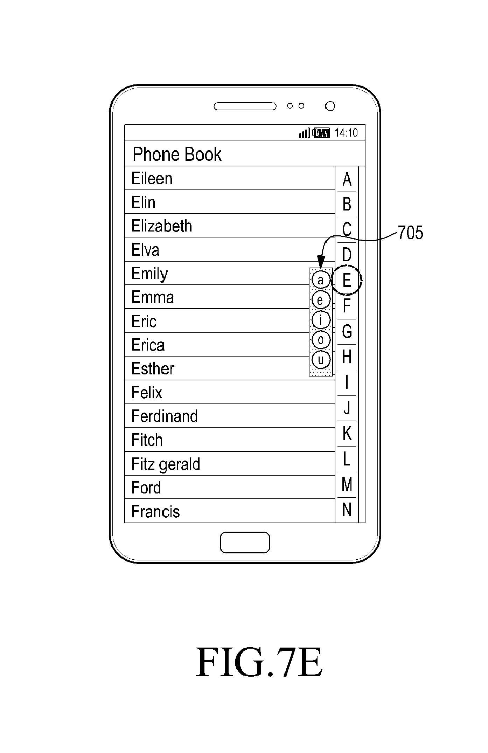

The second index UI is provided for the user to promptly access data items included in the first data subset in consideration of the attribute of the first data subset, and may thus be presented in relatively small space compared to the first index. In this regard, the second index UI 704, 705 may be presented in a horizontal layout as shown in FIG. 7D or may be presented in a vertical layout as shown in FIG. 7E.

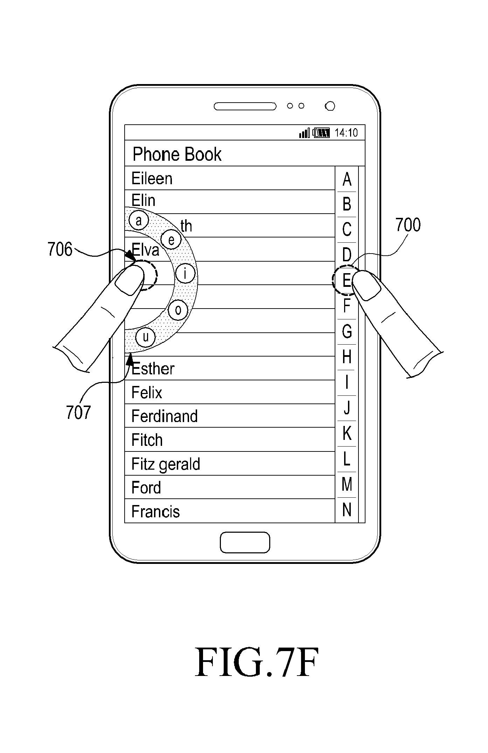

In another example, as shown in FIG. 7F, the second index UI may be presented near a point (e.g., a second touch point) 706 other than the first touch point 700 at which a touch has occurred that selects the first index. In this case, the second index UI may be presented in the form of a circle or a semi-circle centered at the second touch point 706.

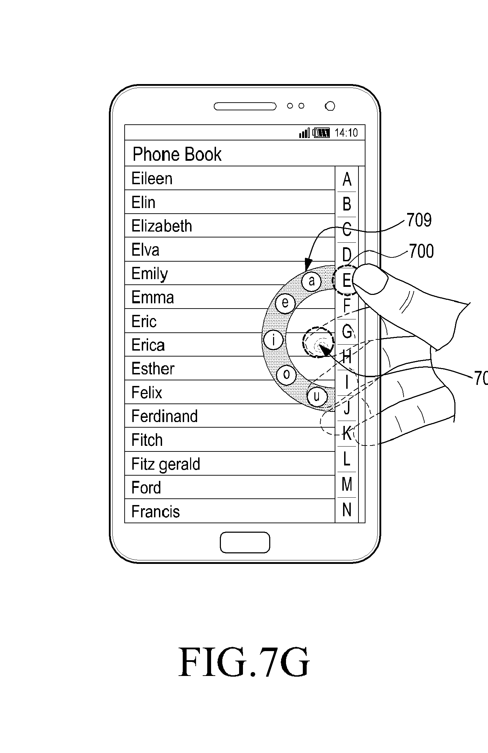

In another example, the second touch point may include a rear touch point 708 in the back face of the electronic device, and the second index UI may be presented near a point in the display area, which corresponds to the rear touch point, as shown in FIG. 7G. The second index UI 709 may also be presented in the form of a circle or a semi-circle centered at the rear touch point 708.

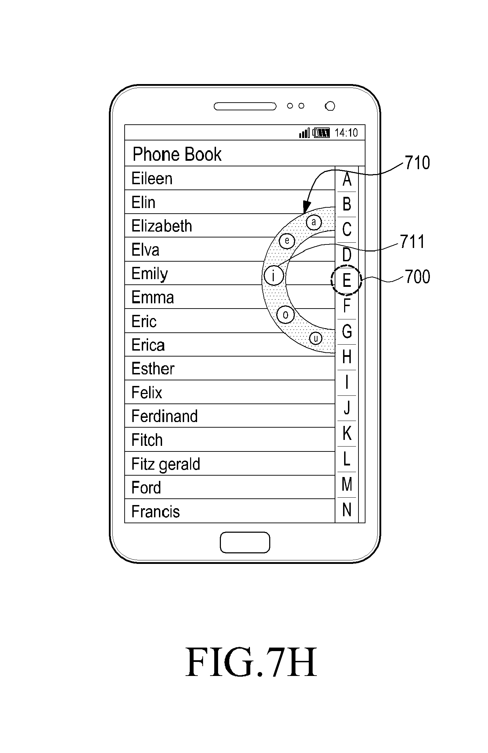

The second index UI may be configured to include the second indexes determined in operation 331. Specifically, if the second indexes are determined based on at least one of the amount and the frequency of use of the data, the second index UI may be configured based on the at least one of the amount and frequency of use of the data. For example, the amount of data items included in the first data subset may be determined, and the second indexes may come in different colors depending on the number of the data items. In another example, a second index having a relatively great number of associated data items may be presented nearer to the first touch point or on an upper part of the second index UI. In yet another example, as shown in FIG. 7H, second indexes may be presented in different size depending on the number of the associated data items, i.e., a second index having a relatively great number (or frequency of use) of associated data items may be presented in a relatively big size. Specifically, among the multiple second indexes e.g., 'a', 'e', 'i', 'o', 'u' included in the second index UI, if an index 'i' 711 has the largest number (or frequency of use) of associated data items, an index 'u' 712 has the second largest number (or frequency of use) of associated data items, and second indexes 'a', 'e', 'o'have relatively small number (or frequency of use) of associated data items compared to the second indexes 'i' and 'u', this may be reflected on determining the size of the second indexes 'i' and 'u' 711 and 712 in the second index UI 710.

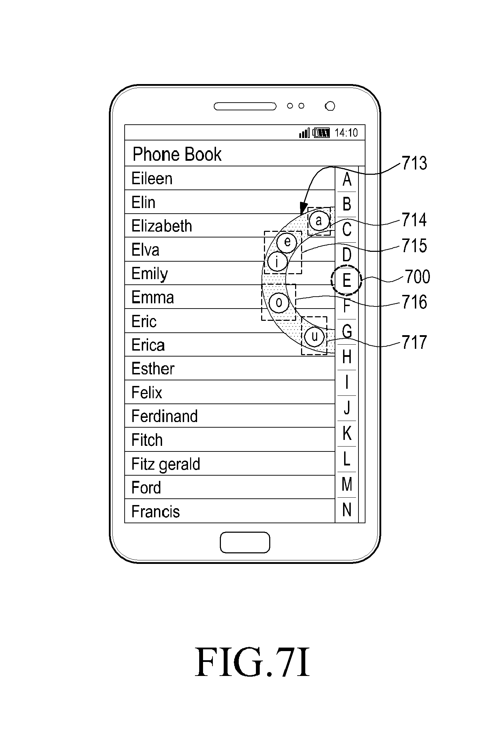

In yet another example, as shown in FIG. 7I, second indexes may be distinguished by position according to the number of associated data items, i.e., a second index having a relatively large number (or frequency of use) of associated data items may be distinguished by being presented in a particular location. Specifically, among the multiple second indexes e.g., 'a', 'e', 'i', 'o', 'u' included in the second index UI 713, given that the second indexes put in decreasing order of the number (or the frequency of use) of associated data items may be 'a', 'e', 'i', 'o', 'u', a second index having a relatively large number (or frequency of use) of associated data items may be arranged in a higher position. Furthermore, in sequentially arranging the second indexes, to distinguish the number (or frequency of use) of associated data items, the second indexes 714, 715, 716, 717 may be presented by grouping them depending on the number (or frequency of use) of the associated data items.

In configuring the second index UI based on the second indexes determined in operation 331, at least one of the amount and frequency of use of associated data may be applied for the second indexes in various ways.

For example, vowels 'a', 'e', 'i', and 'u' may be selected as the second indexes, and the second index UI may be configured to include the vowels 'a', 'e', 'i', and 'u'. The second index UI may later be reconfigured by eliminating a second index, e.g., 'i', that has a relatively little amount of the first data subset and reflecting a second index, e.g., 'u', that has relatively low frequency of use of the first data subset. For example, 'a', 'e', and 'u' may be selected as the second indexes, and the second index UI may be reconfigured to include the vowels 'a', 'e', and 'u'.

A criterion for reconfiguring the second index UI may be changed by the frequency of the user's final selection of each contact in the contact application with the second index. For example, as the user selects a consonant 'h' as a first index, then selects a vowel 'i' as the second index, and finally selects a contact titled 'hiru', a history of the selection of the contact 'hiru' may be recorded. Based on the history of the contact, the ratio of the number of times the combination of the first and second indexes 'hi' has been selected, to the entire number of contacts that have finally been selected, is more than a certain threshold for a certain period of time, it may be changed as described above. For example, if the number of contacts that has been selected for 1 month is 100 and among the 100 contacts and the number of contacts containing the consonant 'h' and the vowel 'i' is 30, the vowel 'i' may be a second index on the assumption that the threshold is 25.

In another example, the frequency of use of data items included in the first data subset may be determined, and the second indexes may come in different colors depending on the frequency of use of the data items of the first data subset. In yet another example, a second index having relatively high frequency of use of associated data may be presented nearer to the first touch point or on the upper part of the second index UI 420. In still another example, based on the frequency of use of associated data, the second indexes may be presented in different size, i.e., a second index having higher frequency of use of associated data may be presented in a relatively larger size.

In the beginning of the use of the electronic device, the second indexes may not include some items desired by the user because the frequency of use of data has not sufficiently been accumulated. Accordingly, until the frequency of use of the data is sufficiently accumulated, the second indexes may be extracted based on the amount of data items included in the first data subset. After the frequency of use of the data is sufficiently accumulated, the second indexes may be extracted based on the amount or frequency of use of data items included in the first data subset. For this, in operation 330, an operation of determining whether the frequency of use of data has sufficiently been accumulated may further be performed.

Various data may be provided by the application and the first index may be configured in association with the data provided by the application. For example, if the data provided by the application is contact data provided by a contact application, the first index may include information required to search for the first letter of the contacts. The second index may include information required to search for the second letter of the contacts. For Korean alphabets, Hangul, the first index may include information required to search for an initial consonant of a first character of a contact. The second index may include information required to search for a vowel of the first character of the contact.

In another example, if a call application provides call log data, the first index and the second index may include information required to search for call log data based on time. For example, the first index may be information indicating the year of the call log data, and the second index may be information indicating the month of the call log data.

Although embodiments of the present disclosure illustrate the first and second index list as described above, they are not limited thereto. The first index or the second index may be anything with which to search for data provided by the application in phases.

Furthermore, while the embodiments of the present disclosure illustrate that the first and second index list have the same criterion e.g., in terms of letter or time stamp) but different indexing levels, they are not limited thereto. For example, the first index and the second index may be configured to have items on the respective different bases. In this case, the first index may include information required to search for data provided by the application based on the time stamp while the second index may include information required to search for data provided by the application based on the type of data.

Various data may be provided by the application and the first index or the second index may be configured in association with the data provided by the application. For example, if the data corresponds to file list data provided by a file browser, the first and second index list may include information associated with the file list data (e.g., time-based information like years, months, days, hours, content types of the files, etc.). For example, the first index may be configured to have information about time when the file was created or information about the run time of the file, while the second index may be configured to have information indicating the content type of the file list data.

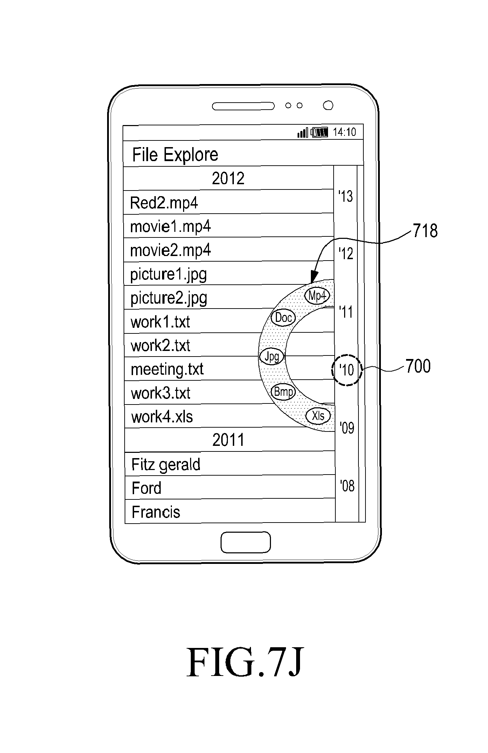

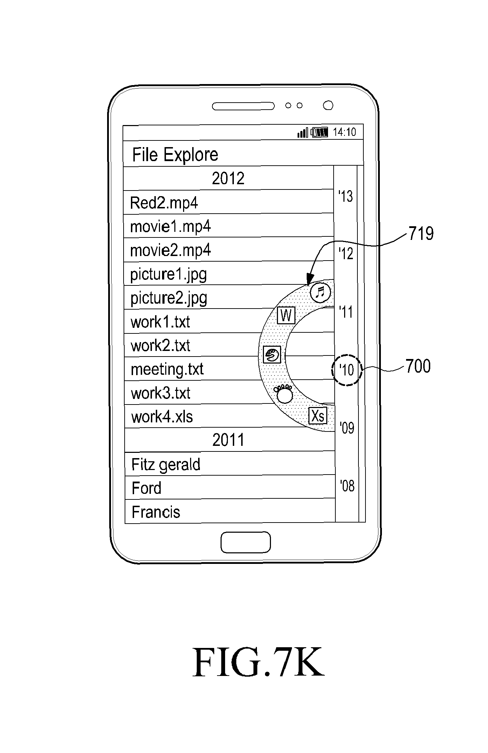

The second index UI may be configured to include second indexes indicating the content type, as shown in FIG. 7J. Furthermore, as shown in FIG. 7K, the second index UI may be configured to include image icons engaged with the second indexes so that the user may recognize the content type more intuitively.

The user may select one of the second indexes more intuitively and more conveniently with the second index UI. The electronic device may then determine the second index in operation 333, selected with the second index UI in operation 332.

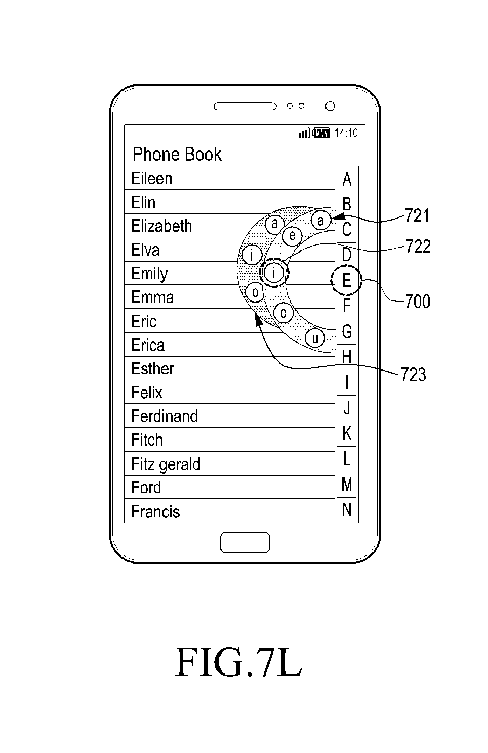

While how to extract the first and second index list are discussed in the above, embodiments of the present disclosure are not limited thereto. With the same method for extracting the second index, a third or higher-order index may be extracted and data associated with a selected index may be extracted and presented. For example, as shown in FIG. 7L, a second index 722 may be detected through the second index UI 721, second data subset items associated with the second index 722 may be determined, and attributes of data items included in the second data subset may be determined. Third indexes may be configured by reflecting the attributes of data items included in the second data subset and a third index UI (723 of FIG. 7L) including third indexes may be presented. With the third index UI 723, at least one of the third indexes may be selected by the user.

According to embodiments of the index processing method and apparatus, index information is provided to the user by taking into account the distribution of data, thus guaranteeing the user to promptly access desired data.

As discussed below, methods according to exemplary embodiments of the present invention may be implemented in program instructions which are executable by various computing means and recorded in computer-readable media. The computer-readable media may include program instructions, data files, data structures, etc., separately or in combination.

The program instructions recorded on the computer-readable media may be designed and configured specially for the present disclosure, or may be well-known to people having ordinary skill in the art of computer software. The embodiments of the present disclosure may be implemented in the form of program instructions and stored in a storage of the electronic device. The program instructions may be temporarily stored in an application processor to carry out the embodiments of the present disclosure. The application processor may control hardware components of the terminal device according to the program instructions of the method, temporarily or permanently store in the storage data generated during the execution of the method, and provide a UI required to perform the method of the embodiments of the present disclosure to the display.

While it is illustrated that the method of various embodiments of the present disclosure is operated and performed in an electronic device, the present disclosure is not limited thereto but the method may be operated and performed in any device as well, e.g., PC such as laptop PC, tablet PC, etc., having an environment to process such indexes.

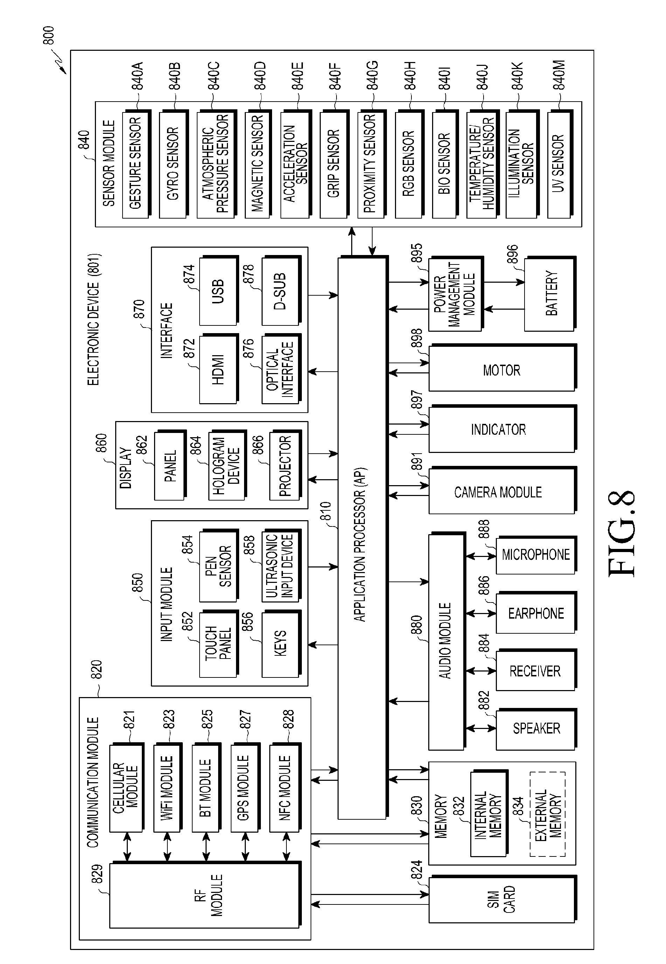

FIG. 8 is a diagram of an example of an electronic device, according to an embodiment of the present disclosure. An electronic device 800 may constitute the entire or some of the electronic device 101 shown in FIG. 1. Referring to FIG. 8, the electronic device 800 may include one or more Application Processors (APs) 810, a communication module 820, a Subscriber Identification Module (SIM) card 824, a memory 830, a sensor module 840, an input unit 850, a display 860, an interface 870, an audio module 880, a camera module 891, a power manager module 895, a battery 896, an indicator 897, and a motor 898.

The AP 810 may control hardware and software components connected to the AP 810 by running an operating system or application programs, and perform data processing and operation. The AP 810 may be implemented by e.g., a System on Chip (SoC). In accordance with an embodiment, the AP 810 may further include a Graphic Processing Unit (GPU).

The communication module 820 (corresponding to the communication interface 160 as shown in FIG. 1) may communicate data with other electronic devices, such as the external electronic device 104 and the server 106 connected via a network. In accordance with an embodiment, the communication module 820 may include a cellular module 821, a Wi-Fi module 823, a BT module 825, a GPS module 827, an NFC module 828, and a Radio Frequency (RF) module 829.

The cellular module 821 may provide voice calls, video calls, SMS or Internet services over a communication network, such as LTE, LTE-A, CDMA, WCDMA, UMTS, WiBro, GSM, etc. The cellular module 821 may also identify and authenticate an electronic device in the communication network in cooperation with the SIM card 824. In accordance with an embodiment, the cellular module 821 may perform at least a part of functions that the AP 810 may provide. For example, the cellular module 821 may perform at least a part of a multimedia control function.

In an embodiment, the cellular module 821 may include a Communication Processor (CP). The cellular module 821 may also be implemented by e.g., a SoC. While the components of FIG. 8, such as the cellular module 821 (e.g., a CP), the memory 830 or the power manager module 895 are illustrated as being separate from the AP 810, the AP 810 may incorporate some of the aforementioned components (e.g., the cellular module 821) in other embodiments.

In accordance with an embodiment, the AP 810 or the cellular module 821 (e.g., a CP) may load a command or data received from at least one of a non-volatile memory or other components connected to the AP 810 or the cellular module 821, and then process the command or data. In addition, the AP 810 or the cellular module 821 may store data received from at least one of the other components or generated by at least one of the other components in a non-volatile memory.

The Wi-Fi module 823, the BT module 825, the GPS module 827, and the NFC module 828 may each include a processor for processing data sent or received through the corresponding module. While FIG. 8 illustrates each of the cellular module 821, the Wi-Fi module 823, the BT module 825, the GPS module 827, and the NFC module 828 as a separate block, some of them (e.g., two or more of them) may be incorporated into a single Integrated Chip (IC) or an IC package in other embodiments. For example, at least some of processors corresponding to the cellular module 821, the Wi-Fi module 823, the BT module 825, the GPS module 827, and the NFC module 828, e.g., a CP of the cellular module 821 and a Wi-Fi processor of the Wi-Fi module 823 may be implemented in a single SoC.

The RF module 829 may perform data communication, more specifically, RF signal communication. The RF module 829 may include e.g., a transceiver, a Power Amp Module (PAM), a frequency filter, or a Low Noise Amplifier (LAN) (not shown). The RF module 829 may further include some parts for wireless communication, i.e., for transmitting or receiving RF signals over the air, such as conductors, wires, etc. While FIG. 8 illustrates that the cellular module 821, the Wi-Fi module 823, the BT module 825, the GPS module 827, and the NFC module 828 share the single RF module 829, at least one of them may perform RF signal communication through a separate RF module.

The SIM card 824 may include a subscriber identification module, and may be inserted into a slot formed in a particular position in the electronic device.

The SIM card 824 may include a unique identification information, such as Integrated Circuit Card Identifier (ICCID), or subscriber information, such as International Mobile Subscriber Identity (IMSI).

The memory 830 (corresponding to the memory 130 of FIG. 1) may include an internal memory 832 or an external memory 834. The internal memory 832 may include e.g., at least one of a volatile memory, such as Dynamic Random Access Memory (DRAM), Static RAM (SRAM), Synchronous Dynamic RAM (SDRAM), or the like, or a non-volatile memory, such as One Time Programmable Read Only Memory (OTPROM), Programmable ROM (PROM), Erasable and Programmable ROM (EPROM), Electrically Erasable and Programmable ROM (EEPROM), mask ROM, flash ROM, NAND flash memory, Nor flash memory, or the like.

In an embodiment, the internal memory 832 may be a Solid State Drive (SSD). The external memory 834 may include a flash drive, such as compact flash (CF), secure digital (SD), micro secure digital (Micro-SD), mini secure digital (Mini-SD), extreme digital (xD), memory stick, or the like. The external memory 834 may be operationally connected to the electronic device 800 through various interfaces. In an embodiment, the electronic device 800 may further include a storage device (or a storage medium), such as a hard drive.

The sensor module 840 may measure a physical quantity or convert information measured or detected by monitoring the electronic device 800 to an electric signal. The sensor module 840 may include at least one of a gesture sensor 840A, a gyro sensor 840B, an atmospheric pressure sensor 840C, a magnetic sensor 840D, an acceleration sensor 840E, a grip sensor 840F, a proximity sensor 840G, a color sensor 840H such as an RGB (Red, Green, Blue) sensor, a biosensor 840I, a temperature/humidity sensor 840J, an illumination sensor 840K, or an Ultra Violet (UV) sensor 840M. Additionally or alternatively, the sensor module 840 may include an E-nose sensor, an electromyography (EMG) sensor, an electroencephalogram (EEG) sensor, an electrocardiogram (ECG) sensor, an infrared (IR) sensor, an iris sensor, a fingerprint sensor, or the like. The sensor module 840 may further include a control circuit for controlling at least one or more of the sensors included in the sensor module 840.

The input device 850 may include a touch panel 852, a (digital) pen sensor 854, a key 856, or an ultrasonic input device 858. The touch panel 852 may recognize touch inputs in at least one of capacitive, resistive, infrared, or ultrasonic methods. The touch panel 852 may further include a control circuit.

With the resistive method, physical contact or proximity detection may be possible. The touch panel 852 may further include a tactile layer. In this regard, the touch panel 852 may provide the user with a tactile response.

The (digital) pen sensor 854 may be implemented in a way identical or similar to e.g., how a touch input of a user is received, or by using a separate sheet for recognition. The key 856 may include e.g., a physical button, optical key or keypad. The ultrasonic input device 858 may use an input tool that generates an ultrasonic signal and enable the electronic device 800 to determine data by sensing the ultrasonic signal to the microphone 888, thereby enabling wireless recognition. In an embodiment, the electronic device 800 may receive a user input from an external device, such as a computer or a server through the communication module 820.

The display 860 (corresponding to the display 150 of FIG. 1) may include a panel 862, a hologram device 864, or a projector 866. The panel 862 may be, e.g" a Liquid Crystal Display (LCD), Active Matrix Organic Light Emitting Diodes (AMOLEDs), or the like. The panel 862 may be implemented to be flexible, transparent, or wearable. The panel 862 may also be incorporated with the touch panel 852 in a unit. The hologram device 864 may make three-dimensional (3D) images (holograms) in the air by using light interference. The projector 866 may display an image by projecting light onto a screen. The screen may be, for example, located inside or outside of the electronic device 800. In accordance with an embodiment, the display 860 may further include a control circuit to control the panel 862, the hologram device 864, or the projector 866.

The interface 870 may include e.g., a High Definition Multimedia Interface (HDMI) 872, a USB 874, an optical interface 876, or a D-subminiature (D-sub) 878. The interface 870 may be included in e.g., the communication interface 160 shown in FIG. 1. Additionally or alternatively, the interface 870 may include a Mobile High-definition Link (MHL) interface, a secure digital (SD) card/ multimedia card (MMC) interface, or IrDA standard interface.

The audio module 880 may convert a sound to an electric signal or vice versa. At least a part of the audio module 880 may be included in e.g., the I/O interface 140 as shown in FIG. 1. The audio module 880 may process sound information input or output through e.g., a speaker 882, a receiver 884, an earphone 886, or a microphone 888.

The camera module 891 may be a device for capturing still images and videos, and may include, in an embodiment, one or more image sensors (e.g., front and back sensors), a lens, an Image Signal Processor (ISP), or a flash such as an LED or xenon lamp.

The power manager module 895 may manage power of the electronic device 800. Although not shown, e.g., a Power management Integrated Circuit (PMIC), a charger IC, or a battery or fuel gauge is included in the power manager module 895.

The PMIC may be mounted on e.g., an IC or an SOC. A charging method may be divided into wired and wireless charging methods. The charger IC may charge a battery and prevent overvoltage or overcurrent from being induced from a charger. In an embodiment, the charger IC may be used in at least one of a cable charging scheme and a wireless charging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging.

The battery gauge may measure an amount of remaining power of the battery 896, a voltage, a current, or a temperature while the battery 896 is being charged. The battery 896 may save or generate electricity, and supply power to the electronic device with the saved or generated electricity. The battery 896 may include, e.g., a rechargeable battery or a solar battery.

The indicator 897 may indicate a particular state of the electronic device 800 or a part of the electronic device (e.g., the AP 810), the particular state including e.g., a booting state, a message state, or charging state. The motor 898 may convert electric signals to mechanical vibration. Although not shown, a processing unit for supporting mobile TV, such as a GPU may be included in the electronic device 800. The processing unit for supporting mobile TV may process media data conforming to a standard for Digital Multimedia Broadcasting (DMB), Digital Video Broadcasting (DVB), or media flow.

Each of the aforementioned components of the electronic device may include one or more parts, and a name of the part may vary with a type of the electronic device.

The electronic device in accordance with various embodiments of the present disclosure may include at least one of the aforementioned components, omit some of them, or include other additional component(s). Some of the components may be combined into an entity, but the entity may perform the same functions as the components may do.

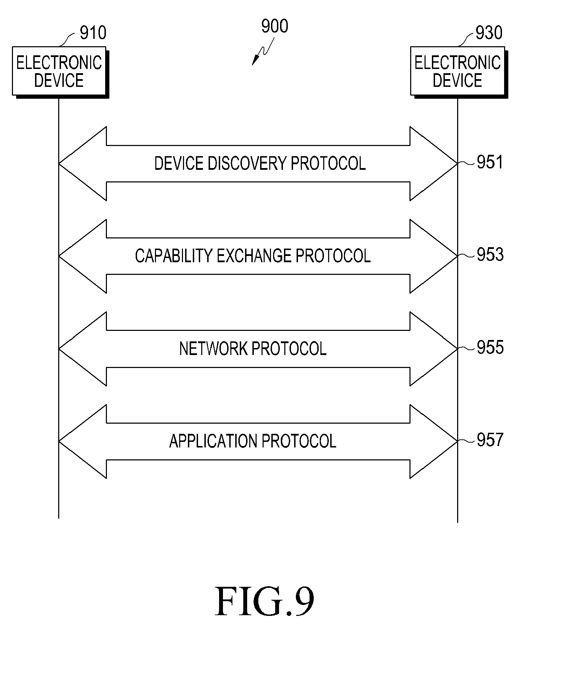

FIG. 9 is a diagram of an example of a protocol stack, according to various embodiments of the present disclosure. FIG. 9 illustrates communication protocols 900 between multiple electronic devices 910 and 930. Referring to FIG. 9, the communication protocol 900 may include a device discovery protocol 951, a capability exchange protocol 953, a network protocol 955, and an application protocol 957.

In accordance with an embodiment, the device discovery protocol 951 may enable each of the electronic devices 910 and 930 to discover an external device that may be able to communicate with the electronic device 910 or 930 and to connect to the discovered device. For example, with the device discovery protocol 951, the electronic device 910 (corresponding to the electronic device 101) may detect the electronic device 930 (corresponding to the external electronic device 104 that may be able to communicate with the electronic device 910 by means of a communication scheme, such as Wi-Fi or USB that may be employed by the electronic device 910. With the device discovery protocol 951, the electronic device 910 may obtain and store information identifying the discovered electronic device 930 in order to establish communication with the electronic device 930. The electronic device 910 may establish communication with the electronic device 930 based on the identification information.

In some embodiments, the device discovery protocol 951 may be a protocol for mutual authentication among multiple electronic devices. For example, the electronic device 910 may perform an authentication procedure with the electronic device 930 based on communication information for access to at least one external electronic device, such as Media Access Control (MAC) address, Universally Unique Identifier (UUID), Subsystem Identification (SSID), Information Provider (IP) address, or the like.

In accordance with an embodiment, the capability exchange protocol 953 may be defined to exchange information associated with a service capability that may be supported by at least one of the electronic devices 910 an 930. For example, with the capability exchange protocol 953, the electronic devices 910 and 930 may exchange information associated with service capabilities being currently provided by them. The exchangeable information may include identification information indicating a particular service among a multiple services that may be supported by the electronic devices 910 and 930. For example, with the capability exchange protocol 953, the electronic device 910 may receive from the electronic device 930 identification information of a particular service provided by the electronic device 930. In this regard, the electronic device 910 may determine whether the electronic device 910 itself may support a particular service based on the received identification information.

In accordance with an embodiment, the network protocol 955 may be defined to control data flow between electronic devices 910 and 930 connected for communication, in order for the electronic devices 910 and 930 to provide a service in cooperation with each other. For example, at least one of the electronic devices 910 and 930 may perform error control, data quality control or the like, using the network protocol 955. Additionally or alternatively, the network protocol 955 may define a transfer format of data exchanged between the electronic devices 910 and 930. Furthermore, with the network protocol 955, at least one of the electronic devices 910 and 930 may manage at least a session (e.g., connect the session or terminate the session) for data exchange.

In accordance with an embodiment, the application protocol 957 may be defined to provide a procedure or information for exchanging data associated with a service to be provided to a foreign electronic device. For example, with the application protocol 957, the electronic device 910 may provide a service to the electronic device 930.

In accordance with an embodiment, the communication protocol 900 may include a standard communication protocol, a proprietary communication protocol defined by an individual or association (e.g., by a communication equipment manufacturer or a network provider), or a combination thereof.

The term 'module' may refer to a unit including one of hardware, software, and firmware, or a combination thereof. The term 'module' may be interchangeably used with a unit, logic, logical block, component, or circuit. The module may be a minimum unit or part of an integrated component. The module may be a minimum unit or part of performing one or more functions. The module may be implemented mechanically or electronically. For example, the module may include at least one of Application Specific Integrated Circuit (ASIC) chips, Field Programmable Gate Arrays (FPGAs), or Programmable Logic Arrays (PLAs) that perform some operations, which have already been known or will be developed in the future.

At least a part of the device (e.g., modules or their functions) or method (e.g., operations) may be implemented as instructions stored in a computer-readable storage medium e.g., in the form of a programming module. The instructions, when executed by one or more processors, e.g., the processor 120 may cause the processor to carry out a corresponding function. The computer-readable storage medium may be e.g., the memory 130. At least a part of the programming module may be implemented by e.g., the processor 120. At least a part of the programming module may include e.g., a module, program, routine, set of instructions, process, or the like for performing one or more functions.

The computer-readable storage medium may include a hardware device configured to store and perform program instructions (e.g., programming module), such as magnetic media such as hard discs, floppy discs, and magnetic tapes, optical media such as Compact Disc ROMs (CD-ROMs) and Digital Versatile Discs (DVDs), magneto-optical media such as floptical disks, ROMs, RAMs, Flash Memories, and/or the like. Examples of the program instructions may include not only machine language codes but also high-level language codes which are executable by various computing means using an interpreter. The aforementioned hardware devices may be configured to operate as one or more software modules to carry out exemplary embodiments of the present disclosure, and vice versa.

In various embodiments of the present disclosure, a storage medium having instructions stored thereon is provided. The instructions, when executed by at least one processor, causes the at least one processor to perform at least one operation including: selecting at least one of first indexes; determining first data subset that corresponds to the selected at least one first index; extracting second indexes based on attributes of data items included in the first data subset; and determining and providing second data subset that corresponds to at least one second index.

Modules or programming modules in accordance with various embodiments of the present disclosure may include at least one or more of the aforementioned components, omit some of them, or further include other additional components. Operations performed by modules, programming modules or other components in accordance with various embodiments of the present invention may be carried out sequentially, simultaneously, repeatedly, or heuristically. Furthermore, some of the operations may be performed in a different order, or omitted, or include other additional operation(s).

FIGS. 1-9 are provided as an example only. At least some of the steps discussed with respect to these figures can be performed concurrently, performed in a different ord er, and/or altogether omitted. It will be understood that the provision of the examples de scribed herein, as well as clauses phrased as "such as," "e.g.", "including", "in some asp ects," "in some implementations," and the like should not be interpreted as limiting the c laimed subject matter to the specific examples.

The above-described aspects of the present disclosure can be implemented in har dware, firmware or via the execution of software or computer code that can be stored in a recording medium such as a CD-ROM, a Digital Versatile Disc (DVD), a magnetic tap e, a RAM, a floppy disk, a hard disk, or a magneto-optical disk or computer code downl oaded over a network originally stored on a remote recording medium or a non-transitor y machine-readable medium and to be stored on a local recording medium, so that the m ethods described herein can be rendered via such software that is stored on the recording medium using a general purpose computer, or a special processor or in programmable o r dedicated hardware, such as an ASIC or FPGA. As would be understood in the art, the computer, the processor, microprocessor controller or the programmable hardware inclu de memory components, e.g., RAM, ROM, Flash, etc. that may store or receive software or computer code that when accessed and executed by the computer, processor or hardw are implement the processing methods described herein. In addition, it would be recogni zed that when a general purpose computer accesses code for implementing the processin g shown herein, the execution of the code transforms the general purpose computer into a special purpose computer for executing the processing shown herein. Any of the funct ions and steps provided in the Figures may be implemented in hardware, software or a c ombination of both and may be performed in whole or in part within the programmed ins tructions of a computer. No claim element herein is to be construed under the provisions of 35 U.S.C. 112, sixth paragraph, unless the element is expressly recited using the phras e "means for".

While the present disclosure has been particularly shown and described with refe rence to the examples provided therein, it will be understood by those skilled in the art th at various changes in form and details may be made therein without departing from the s pirit and scope of the present disclosure as defined by the appended claims.

## Claims

1. A method in an electronic device, comprising:
displaying a set of data items and a first index list;
detecting a first selection of a first index from the first index list;
identifying a first subset of the set of data items, the first subset being associated with the first index;
displaying, by the electronic device, a second index list that is associated with the first subset;
detecting a second selection of a second index from the second index list; and
identifying a second subset of the set of data items, the second subset being associated with both the first index and the second index.

2. The method of claim 1, wherein the first index list is generated based on a first data item attribute and the second index list is generated based on a second data item attribute.

3. The method of claim 1, wherein the first index list is generated based on at least one of a respective type of each of the data items in the set and a respective frequency of use of each of the data items in the set.

4. The method of claim 1, wherein generating the second index list comprises including the second index in the second index list based on a count of data items from the second subset that are associated with the second index, or based on a frequency of use of at least one data item that is associated with the second index.

5. The method of claim 1, wherein the second index list is generated based on a size of the first index list, so that the second index list includes fewer indices than the second index list.

6. The method of claim 1, wherein the second selection is detected in response to a touch being performed on a touchscreen of the electronic device, and the second index list is displayed in a semi-circular layout by arranging a plurality of indices in a semi-circle centered around a location on the touchscreen where the touch is detected.

7. The method of claim 1, wherein the first index list is displayed in accordance with a first layout and the second index list is displayed in accordance with a second layout, and
the second selection is detected in response to a gesture performed on a touchscreen of the electronic device and the second layout is selected based on a direction associated with the gesture..

8. The method of claim 1, wherein the second selection is detected in response to a touch being performed on a touchscreen of the electronic device, wherein the second index list is displayed for only while the touch is maintained.

9. The method of claim 1, first comprising:
displaying a third index list that is associated with the second subset;
detecting a third selection of a third index from the third index list; and
displaying a third subset of the set of data items, the third subset being associated with the first index, the second index, and the third index.

10. An electronic device, comprising:
a display; and
an input device;
at least one processor configured to:
control the display to display a set of data items and a first index list;
detect, via the input device, a first selection of a first index from the first index list;
identify first subset of the set of data items, the first subset being associated with the first index;
generate a second index list that is associated with the first subset and control the display to display the second index list;
detect, via the input device, a second selection of a second index from the second index list; and
identify a second subset of the set of data items, the second subset being associated with both the first index and the second index.

11. The electronic device of claim 10, wherein the first index list is generated based on at least one of a respective type of each of the data items in the set and a respective frequency of use of each of the data items in the set.

12. The electronic device of claim 11, wherein generating the second index list comprises including the second index in the second index list based on a count of data items from the second subset that are associated with the second index, or based on a frequency of use of at least one data item that is associated with the second index.

13. The electronic device of claim 10, wherein the second index list is generated based on a size of the first index list, so that the second index list includes fewer indices than the second index list.

14. The electronic device of claim 10, wherein the first index list is displayed in accordance with a first layout and the second index list is displayed in accordance with a second layout.

15. A non-transitory computer-readable medium storing one or more processor-executable instructions, which when executed by at least one processor cause the processor to execute a method comprising the steps of:
displaying a set of data items and a first index list;
detecting a first selection of a first index from the first index list;
identifying a first subset of the set of data items, the first subset being associated with the first index;
displaying a second index list that is associated with the first subset;
detecting a second selection of a second index from the second index list; and
identifying a second subset of the set of data items, the second subset being associated with both the first index and the second index.
